# EUROPEAN PATENT APPLICATION

(11) **EP 4 064 745 A1**
(43) Date of publication of application: **28.09.2022**
(21) Application number: 20891617.1
(22) Date of filing: 06.11.2020
(51) Int. Cl.: H04W 8/26

(54) **NETWORK DEVICE MANAGEMENT METHOD AND APPARATUS, NETWORK MANAGEMENT DEVICE, AND MEDIUM**

(30) Priority: 29.11.2019 CN 201911198866
(71) Applicant: ZTE Corporation, Shenzhen, Guangdong 518057 (CN)
(72) Inventor: YANG, Yan, Shenzhen, Guangdong 518057 (CN)
(74) Representative: Swindell & Pearson Limited
(86) International application number: PCT/CN2020/127222
(87) International publication number: WO 2021/103986

(57) **Abstract**

A network device management method and apparatus, a network management device, and a medium. Said method comprises: receiving an access authentication request of a network device and authenticating the network device (S 110); if the authentication is passed, creating a loopback interface of the network device according to pre-configuration information and allocating a loopback interface address, the pre-configuration information comprising a loopback interface address pool and a first address allocation rule (S120); and managing the network device by means of the loopback interface address (S 130).

## Description

### CROSS-REFERENCE TO RELATED APPLICATION

This application is filed on the basis of Chinese Patent Application No. 201911198866.7, filed on November 29, 2019, and claims priority to the Chinese Patent Application, the entire contents of which are incorporated herein by reference.

### TECHNICAL FIELD

The present disclosure relates to the field of wireless communication networks, and more particularly, to a network device management method and apparatus, a network management device, and a medium.

### BACKGROUND

In large-scale network service deployment scenarios, a variety of network devices are distributed in different regions, densely and in large numbers. A network management device may manage various network devices and needs to meet high requirements on management efficiency. For example, a physical interface address or a transfer gateway interface address is acquired between a server and each network device by carrying user-defined attributes in messages, a connection between the server and each network device may be established by using the acquired interface address, and the server manages the network devices through the interface addresses. If the user-defined attributes or the transfer gateway is changed, the interface addresses for managing the network devices are also changed, which is not conducive to the unified management of the network devices by the server, leading to poor management efficiency and stability.

### SUMMARY

The present disclosure provides a network device management method and apparatus, a network management device, and a medium, to improve management efficiency and management stability by managing network devices through fixed interface addresses.

According to some embodiment of the present disclosure, a network device management method is provided, including: receiving an access authentication request of a network device and authenticating the network device; creating, in response to the authentication being passed, a loopback interface of the network device according to pre-configuration information and allocating a loopback interface address, the pre-configuration information including a loopback interface address pool and a first address allocation rule; and managing the network device through the loopback interface address.

According to some embodiment of the present disclosure, a network device management apparatus is further provided, including: an authentication module configured to receive an access authentication request of a network device and authenticate the network device; an interface creation module configured to create, in response to the authentication being passed, a loopback interface of the network device according to pre-configuration information and allocate a loopback interface address, the pre-configuration information including a loopback interface address pool and a first address allocation rule; and a management module configured to manage the network device through the loopback interface address.

According to some embodiment of the present disclosure, a network management device is further provided, including: one or more controllers; and a storage apparatus configured to store one or more programs which; when executed by the one or more controllers, cause the one or more controllers to carry out the network device management method described above.

According to some embodiment of the present disclosure, a computer-readable storage medium is further provided, storing a computer program which, when executed by a controller, causes the controller to carry out the network device management method described above.

### BRIEF DESCRIPTION OF DRAWINGS

The accompanying drawings described herein are intended to provide a further understanding of the present disclosure, and form part of the present disclosure. The exemplary embodiments and descriptions thereof in the present disclosure are intended to illustrate the present disclosure and do not limit the present disclosure in any improper way.
FIG. 1 is a flowchart of a network device management method according to an embodiment;
FIG. 2 is a flowchart of a network device management method according to another embodiment;
FIG. 3 is a schematic diagram of establishment of a management link to a network device according to an embodiment;
FIG. 4 is a schematic structural diagram of a network device management apparatus according to an embodiment; and
FIG. 5 is a schematic diagram of a hardware structure of a network management device according to an embodiment.

### DETAILED DESCRIPTION

The present disclosure will be described below with reference to the accompanying drawings and embodiments. It is to be understood that specific embodiments described herein are intended only to illustrate the present disclosure and not to limit the present disclosure. It is to be noted that the embodiments in the present disclosure and features in the embodiments may be combined with each other if not conflicted. It is also to be noted that, to facilitate the description, the drawings only show some rather than all of structures relevant to the present disclosure.

An embodiment of the present disclosure provides a network device management method to improve management efficiency and management stability by managing network devices through fixed interface addresses.

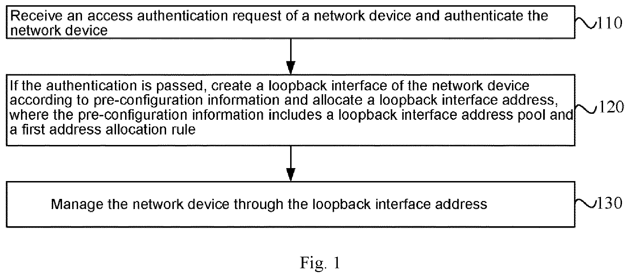

FIG. 1 is a flowchart of a network device management method according to an embodiment. The method may be applied to a network management device. As shown in FIG. 1, the method according to this embodiment includes S110 to S130.

At S110, an access authentication request of a network device is received, and the network device is authenticated.

At S120, if the authentication is passed, a loopback interface of the network device is created according to pre-configuration information and a loopback interface address is allocated, where the pre-configuration information includes a loopback interface address pool and a first address allocation rule.

At S130, the network device is managed through the loopback interface address.

In this embodiment, the network device refers to a physical entity that may be connected to the network management device, such as a router, a switch, a bridge, or a computer. The network device may be connected to the network management device in a wired or wireless manner. As a management center, the network management device may manage, maintain, and monitor all network devices on a network, and report and handle faults of the network devices in a timely manner to coordinate the efficient operation of the network.

In this embodiment, after receiving an access authentication request of a network device, the network management device authenticates the network device, and if the authentication is passed, establishes a Network Configuration Protocol (NETCONF) link, creates a loopback interface of the network device according to pre-configuration information and allocates a loopback interface address. The loopback interface address serves as a fixed interface address for managing the network device. The pre-configuration information includes a loopback interface address pool and a first address allocation rule. The network management device allocates, according to the first address allocation rule, one loopback interface address from the loopback interface address pool to the network management device passing the authentication. The first address allocation rule may be allocating a loopback interface address to the network device according to a Dynamic Host Configuration Protocol (DHCP), or allocating a loopback interface address after first access authentication of the network device is passed and then fixedly using the same address after another access; or allocating a particular loopback interface address according to a device identifier and a device serial number of the network device. After the allocation of the loopback interface address, the network management device may create the network device as a network element within its management scope, and return that the state of the network element is normal (the state of the network device is online) and the management address is the allocated loopback interface address. On this basis, the network management device may manage the network device through a fixed loopback interface address.

In an embodiment, the pre-configuration information further includes a security management channel interface address pool and a second address allocation rule; and after the allocating a loopback interface address, the method further includes: creating, according to the pre-configuration information, security management channels of the network device and a corresponding gateway network element, and allocating security management channel interface addresses. The managing the network device through the loopback interface address includes: managing the network device through the security management channels and the loopback interface address.

In this embodiment, the pre-configuration information further includes a security management channel interface address pool and a second address allocation rule. After establishing the NETCONF link with the network device, in addition to allocating the loopback interface address, the network management device may further judge, according to the pre-configuration information, whether the network device may be managed through the security management channel (whether the security management channel is enabled); and if yes, create security management channels of the network device and a corresponding gateway network element, and allocate security management channel interface addresses according to the second address allocation rule. On this basis, the network management device may manage the network device through the security management channel from the gateway network element to the network device. The gateway network element refers to a network element directly connected to the network management device, which plays a role of forwarding during communication between the network management device and other network elements (various network devices that establish links), and may separate the network management device from network addresses of the other network elements, without affecting each other, thereby improving management security. The second address allocation rule may be creating, according to the device identifier and the device serial number of the network device and in combination with a specific application scenario, different types of security management channels between the network device and the gateway network element, and allocating an interface address. If the network device requires no security management channel, the network management device may manage the network device directly by using the address delivered during the establishment of the NETCONF link.

In an embodiment, the network management device judges whether the security management channel of the network device is enabled, and if yes, delivers Internet Protocol Security (IPSEC) secure encryption tunnel configuration through the established NETCONF link, so as to create a security management channel. The process includes: the network management device creates an IPSEC secure encryption tunnel between the network device and the corresponding gateway network element and allocates a tunnel interface address after creating the loopback interface and allocating the loopback interface address. For the network device, a configuration mode of the IPSEC secure encryption tunnel is static. That is, a local end of the IPSEC secure encryption tunnel is a Wide Area Network (WAN) interface name, a peer end is a WAN interface address corresponding to the gateway network element, and in a case where Network Address Translation (NAT) is configured in the pre-configuration information (network device service configuration information table), the peer end is a translated address configured by the NAT. For the gateway network element, the configuration mode of the IPSEC secure encryption tunnel is dynamic. That is, the local end of the IPSEC secure encryption tunnel is a WAN interface address, and no configuration is performed on the peer end. IPSEC secure encryption tunnel interface addresses of the network device and the gateway network element may be allocated from the security management channel address pool in the pre-configuration information. For example, two addresses with 30-bit masks are delivered from the security management channel address pool.

In an embodiment, the method further includes: delivering a first static route to the network device, a destination address of the first static route being a WAN port address, and a next hop being the security management channel interface address of the gateway network element; and delivering a second static route to the gateway network element, a destination address of the second static route being the loopback interface address of the network device, and a next hop being the security management channel interface address of the network device.

In this embodiment, after the establishment of the NETCONF link, the network management device delivers a static route from the network device to the network management device, in which a destination address is a controller management address, and a next hop is an IPSEC secure encryption tunnel interface address on the gateway network element. The network management device further delivers a static route from a gateway device to the network device, in which a destination address is a loopback interface address of the network device, and a next hop is an IPSEC secure encryption tunnel interface address on the network device.

In an embodiment, the pre-configuration information further includes: WAN port address information, a network device identifier information table, and a network device service configuration information table; where the WAN port address information includes: a WAN port address pool and a third address allocation rule; the network device identifier information table includes: a device serial number and a device type corresponding to the network device; and the network device service configuration information table includes: a device serial number, a WAN port address, a communication mode, an access authentication address and port, an authentication key, a network configuration enabling state, and a security management channel enabling state corresponding to the network device.

In this embodiment, the network management device pre-configures various types of address information. For example:
a loopback interface address pool is configured to allocate a loopback interface address to the network device, and a first address allocation rule (for example, a LOOPBACK21 interface address of the network device is configured as a fixed management address or any LOOPBACK interface address is set as a management address according to actual use, etc.) is configured.

A WAN port address pool (which may also be a device access address pool) is configured to allocate a WAN port address to the network device requesting an access, and a corresponding third address allocation rule is configured.

A security management channel interface address pool is configured to allocate a security management channel interface address in the process of creating a security management channel for the network device and the gateway device, and a second address allocation rule may be configured.

A deployment network device identifier information table is further imported to the network management device during the pre-configuration. The deployment network device identifier information table may include a vendor name, a device serial number, a device type, and a memo field of the network device. The deployment network device identifier information table is imported to the network management device in the form of a configuration file. The network management device writes the imported data into a database. The device serial number is a unique identifier of the network device. Different network devices have different device serial numbers, which have been set in the factory. The network device may be a high-end router or a wireless device such as a Customer Premise Equipment (CPE). The network device with a unique identifier may be managed with the method of this embodiment.

In the process of importing the deployment network device identifier information table, the network management device makes judgment according to the device type and/or the vendor, and only information in line with a preset device type and/or vendor can be imported successfully. That is, the network management device can manage only the network device in line with the preset device type and/or vendor.

A network device service configuration information table is further imported to the network management device during the pre-configuration. The network device service configuration information table includes pre-planned service configuration information required by network device access, for example, a device serial number, a WAN port (an interface through which the network device is connected to the network) address, a communication mode (e-mail configuration, phone, etc.), an access authentication (CALL HOME) address and port, an authentication key, a network configuration (NETCONF) enabling state, and a security management channel enabling state of the network device. The WAN port address is allocated from the WAN port address pool in the address information, and the allocation rule is DHCP static or dynamic. The authentication key is configured to verify the security of the network device when the network device initiates an access request. After receiving an e-mail or SMS and clicking a Uniform Resource Locator (URL) in the e-mail or SMS, a user of the network device may receive prompt information for entering a password. The password is the authentication key. The authentication key is sent to the user in advance and is a necessary means of verifying access configuration of the network device. The authentication key may be pre-delivered to the user of the network device by e-mail or SMS or along with the network device. The CALL HOME address is an address of the network management device (controller), and the CALL HOME port is a port used by the network device to create a Transmission Control Protocol (TCP) connection with the network management device.

The network device service configuration information table is imported to the network management device in the form of a configuration file. The network management device writes the imported data to the database. In the process of importing the network device service configuration information table, the network management device judges whether the device serial number is consistent with the device serial number in the deployment network device identifier information table, and if yes, the network device service configuration information table is imported successfully.

In an embodiment, prior to the receiving an access authentication request of a network device, the method further includes: delivering a URL to the network device according to the communication mode, the URL being encrypted by the authentication key; where the URL carries access configuration information including the WAN port address, the CALL HOME address and port, and the network configuration enabling state; and the access configuration information further includes a security management channel interface address of a corresponding gateway network element if the security management channel enabling state is ON.

In this embodiment, the network management device delivers access configuration information to the network device by e-mail or SMS. The access configuration information is included in the URL encrypted by the authentication key. The user of the network device clicks the link in the e-mail or SMS and enters the authentication key to acquire the access configuration information. The access configuration information includes configuration information required by access authentication, for example, the WAN port address (mask and gateway address), the CALL HOME address and port, and the network configuration enabling state. For example, after clicking the URL link in the e-mail or SMS, the user opens a WEB management interface of the network device, and may enter the pre-received authentication key according to prompt information on the interface. The interface decrypts a to-be-delivered configuration, connects a specified WAN port to the network according to the configuration, and clicks to deliver the configuration. The access configuration information can be successfully delivered to the network device.

In an embodiment, the access authentication request is sent by the network device to the CALL HOME address through the CALL HOME port in the form of a TCP session. The access authentication request carries the device serial number and a transport layer security (TLS) certificate of the network device.

In this embodiment, after receiving the URL and enabling NETCONF, the network device may initiate access authentication to the network management device through the WAN port. The destination address is a CALL HOME address in the access configuration information. Firstly, the network device carries a device serial number to send the access authentication request (TCP request) in the form of a TCP session. After receiving the access authentication request, the network management device judges whether the device serial number belongs to a device serial number in the pre-configuration information, and if yes, sends a TLS session request to the network device; and if no, terminates the TCP session.

In an embodiment, the authenticating the network device includes: if the device serial number of the network device belongs to a device serial number in the pre-configuration information, verifying the TLS certificate of the network device, and starting a NETCONF if the TLS certificate passes the verification, that the authentication is passed; and if the device serial number of the network device does not belong to the device serial number in the pre-configuration information, terminating the TCP session, the authentication fails.

In this embodiment, the network device sends a TCP request carrying a TLS certificate to the network management device, and the network management device verifies the TLS certificate provided by the network device. The verification may be completed by a certificate path or completed by comparing the TLS certificate (or host key) with a previously trusted or fixed value. If the TLS certificate is a trusted valid certificate, a TLS connection is established, which means that the NETCONF protocol is successfully started between the network management device and the network device, that is, a NETCONF link is successfully established. After the NETCONF link is successfully established, the network management device allocates the loopback interface address as a fixed management address, and further judges, according to the pre-configuration information, whether it is necessary to pass the security channel management, and if yes, delivers an IPSEC secure encryption channel configuration through the NETCONF link. For example, the network management device uses the LOOPBACK21 address as a fixed management address to create a network element of the network device, and may manage the network device through the management address and an IPSEC secure tunnel. The network management device returns that the network device is online.

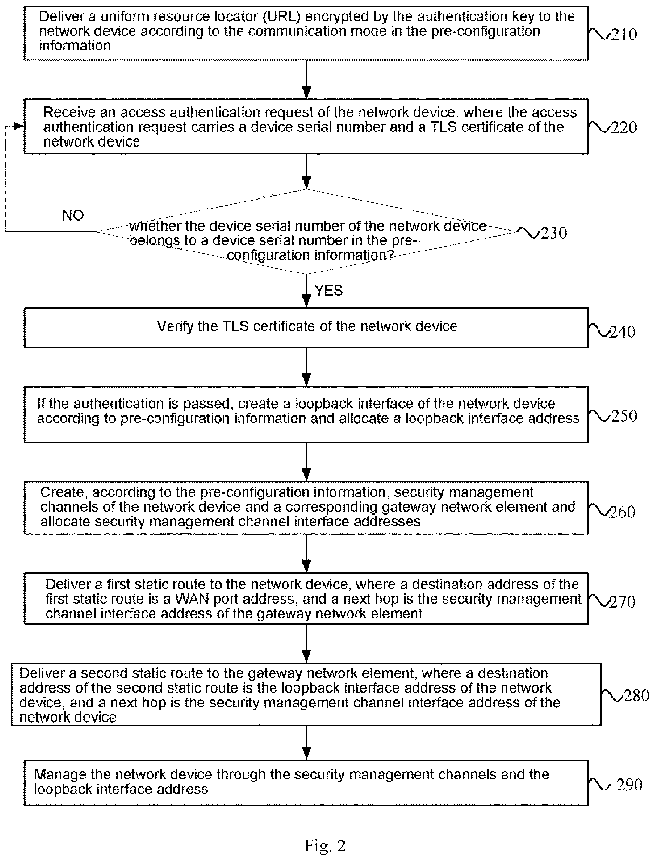

FIG. 2 is a flowchart of a network device management method according to another embodiment. As shown in FIG. 2, the method includes S210 to S290.

At S210, a URL encrypted by the authentication key is delivered to the network device according to the communication mode in the pre-configuration information.

At S220, an access authentication request of the network device that carries a device serial number and a TLS certificate of the network device is received.

At S230, whether the device serial number of the network device belongs to a device serial number in the pre-configuration information is judged. If yes, S240 is performed; if no, the authentication fails.

In an embodiment, when the authentication fails, S220 is performed to receive the access authentication request again.

At S240, the TLS certificate of the network device is verified.

At S250, if the authentication is passed, a loopback interface of the network device is created according to pre-configuration information, and a loopback interface address is allocated.

At S260, according to the pre-configuration information, security management channels of the network device and a corresponding gateway network element are created, and security management channel interface addresses are allocated.

At S270, a first static route is delivered to the network device, a destination address of the first static route is a WAN port address, and a next hop is the security management channel interface address of the gateway network element.

At S280, a second static route is delivered to the gateway network element, a destination address of the second static route is the loopback interface address of the network device, and a next hop is the security management channel interface address of the network device.

At S290, the network device is managed through the security management channels and the loopback interface address.

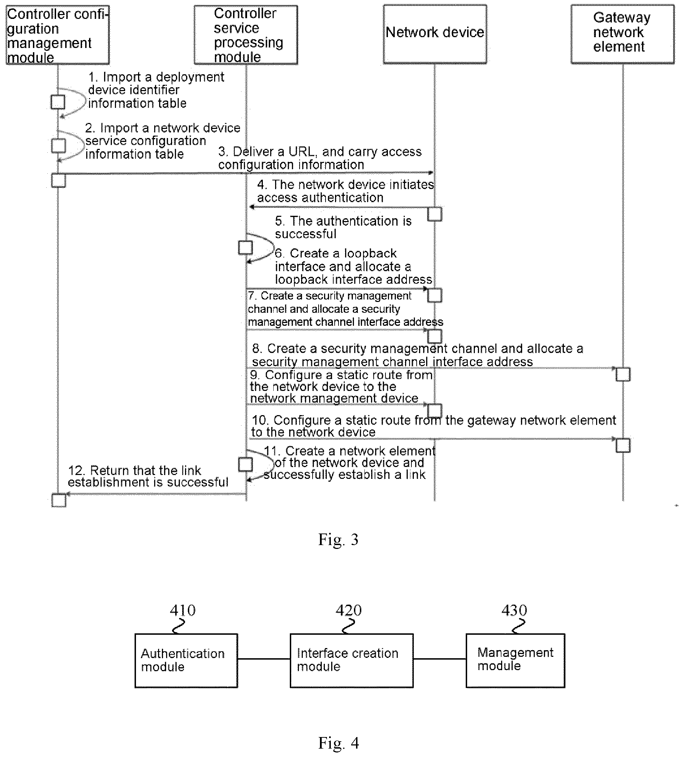

FIG. 3 is a schematic diagram of establishment of a management link to a network device according to an embodiment. In this embodiment, a controller configuration management module and a controller service processing module are management units in a network management device. The controller configuration management module is configured to pre-configure and deliver access configuration information and update an online state of the network device. The controller service processing module is configured to process services such as interface creation, channel creation, and route configuration of the network device and the gateway network element. As shown in FIG. 3, the process of establishing the management link to the network device is specifically as follows.
1. A deployment device identifier information table is imported to the controller configuration management module.
2. A network device service configuration information table is imported to the controller configuration management module.
3. The controller service processing module delivers a URL which carries access configuration information to the network device.
4. The network device initiates a CALL HOME request to the controller service processing module.
5. The controller service processing module authenticates the CALL HOME request (taking the successful authentication as an example).
6. The controller service processing module creates a loopback interface and allocates a loopback interface address.
7. The controller service processing module creates a security management channel of the network device and allocates a security management channel interface address.
8. The controller service processing module creates a security management channel of the corresponding gateway network element and allocates a security management channel interface address.
9. The controller service processing module configures a static route from the network device to a server.
10. The controller service processing module configures a static route from the gateway network element to the network device.
11. The controller service processing module creates a network element of the network device and successfully establishes a link.
12. The controller service processing module returns to the controller configuration management module that the link establishment is successful, and the network device is in an online state.

According to the network device management method of this embodiment, a network device is managed through a fixed loopback interface address, which improves the stability of management; and the network device may be managed through a security management channel, which improves the security of management. In addition, links among the network management device, the network device, and the corresponding gateway network element are established by delivering access configuration information, verifying a device serial number and a TLS certificate and delivering a static route, so as to establish a thorough management mechanism to manage the network device comprehensively.

According to some embodiments of the present disclosure, a network device management apparatus is further provided. FIG. 4 is a schematic structural diagram of a network device management apparatus according to an embodiment. As shown in FIG. 4, the network device management apparatus includes: an authentication module 410, an interface creation module 420, and a management module 430.

The authentication module 410 is configured to receive an access authentication request of a network device and authenticate the network device.

The interface creation module 420 is configured to create, if the authentication is passed, a loopback interface of the network device according to pre-configuration information and allocate a loopback interface address, where the pre-configuration information includes a loopback interface address pool and a first address allocation rule.

The management module 430 is configured to manage the network device through the loopback interface address.

According to the network device management apparatus in this embodiment, the network device is managed through a fixed interface address, which improves management efficiency and management stability.

In an embodiment, the pre-configuration information further includes a security management channel interface address pool and a second address allocation rule;
after the loopback interface address is allocated, the apparatus further includes:
a channel creation module configured to create, according to the pre-configuration information, security management channels of the network device and a corresponding gateway network element and allocate security management channel interface addresses; and
the managing the network device through the loopback interface address includes:
   managing the network device through the security management channels and the loopback interface address.

In an embodiment, the apparatus further includes:
a first route delivery module configured to deliver a first static route to the network device, where a destination address of the first static route is a WAN port address, and a next hop is the security management channel interface address of the gateway network element; and
a second route delivery module configured to deliver a second static route to the gateway network element, where a destination address of the second static route is the loopback interface address of the network device, and a next hop is the security management channel interface address of the network device.

In an embodiment, the pre-configuration information further includes: WAN port address information, a network device identifier information table, and a network device service configuration information table.

The WAN port address information includes: a WAN port address pool and a third address allocation rule.

The network device identifier information table includes: a device serial number and a device type corresponding to the network device.

The network device service configuration information table includes: a device serial number, a WAN port address, a communication mode, an access authentication address and port, an authentication key, a network configuration enabling state, and a security management channel enabling state corresponding to the network device.

In an embodiment, the apparatus further includes:
a URL delivery module configured to deliver, prior to the receiving an access authentication request of a network device, a uniform resource locator (URL) encrypted by the authentication key to the network device according to the communication mode;
where the URL carries access configuration information including the WAN port address, the access authentication address and port, and the network configuration enabling state; and
the access configuration information further includes a security management channel interface address of a corresponding gateway network element if the security management channel enabling state is ON.

In an embodiment, the access authentication request is sent by the network device to the access authentication address through the access authentication port in the form of a TCP session; and
the access authentication request carries the device serial number and a TLS certificate of the network device.

In an embodiment, the authentication module 410 is specifically configured to:
receive an access authentication request of a network device;
if the device serial number of the network device belongs to a device serial number in the pre-configuration information, verify the TLS certificate of the network device, and start a NETCONF if the TLS certificate passes the verification, the authentication is passed; and
if the device serial number of the network device does not belong to the device serial number in the pre-configuration information, terminate the TCP session, the authentication fails.

The network device management apparatus according to this embodiment and the network device management method according to the above embodiment belong to the same concept. Technical details not described in detail in this embodiment may be obtained with reference to any of the above embodiments, and this embodiment has the same beneficial effects as the execution of the network device management method.

According to some embodiments of the present disclosure, a network management device is further provided. The network device management method may be performed by a network device management apparatus. The network device management apparatus may be implemented by software and/or hardware, and may be integrated into the network management device.

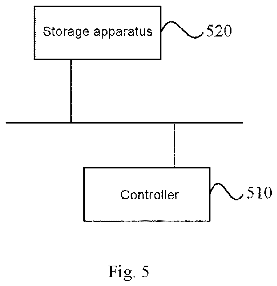

FIG. 5 is a schematic diagram of a hardware structure of a network management device according to an embodiment. As shown in FIG. 5, the network management device according to this embodiment includes a controller 510 and a storage apparatus 520. The network management device may be provided with one or more controllers. One controller 510 is taken as an example in FIG. 5. The controller 510 and the storage apparatus 520 in the device may be connected by a bus or in other manners. The connection by a bus is taken as an example in FIG. 5.

The one or more programs are executed by the one or more controllers 510 to cause the one or more controllers to perform the network device management method of any one of the above embodiments.

The storage apparatus 520 in the network management device serves as a computer-readable storage medium and may be configured to store one or more programs. The program may be a software program, a computer-executable program or a module, such as program instructions/modules (for example, the modules in the network device management apparatus shown in FIG. 4, including the authentication module 410, the interface creation module 420, and the management module 430) corresponding to the network device management method in the embodiment of the present disclosure. The controller 510 runs the software program, instruction and module stored in the storage apparatus 520 to execute various function applications and data processing of the network management device, i.e., to perform the network device management method in the above method embodiment.

The storage apparatus 520 mainly includes a program storage area and a data storage area. The program storage area may store an operating system and an application program required by at least one function. The data storage area may store data (such as the access authentication request and the pre-configuration information in the above embodiment) created according to use of the device, and the like. In addition, the storage apparatus 520 may include a high-speed random access memory, and may also include a non-volatile memory such as at least one disk storage device, a flash memory, or another volatile solid-state storage device. In some examples, the storage apparatus 520 may further include memories remotely disposed relative to the controller 510. Such remote memories may be connected to the network management device through a network. Examples of the network include, but are not limited to, the Internet, a corporate intranet, a local area network, a mobile communication network, and combinations thereof.

Moreover, when the one or more programs included in the network management device are executed by the one or more controllers 510, the following operations are performed: receiving an access authentication request of a network device and authenticating the network device; creating, if the authentication is passed, a loopback interface of the network device according to pre-configuration information, and allocating a loopback interface address, the pre-configuration information including a loopback interface address pool and a first address allocation rule; and managing the network device through the loopback interface address.

The network management device according to this embodiment and the network device management method according to the above embodiment belong to the same concept. Technical details not described in detail in this embodiment may be obtained with reference to any of the above embodiments, and this embodiment has the same beneficial effects as the execution of the network device management method.

According to some embodiments of the present disclosure, a storage medium including computer-executable instructions is further provided. The computer-executable instructions are configured to perform a network device management method when executed by a computer controller.

From the above description of the implementations, those skilled in the art may understand that the present disclosure may be implemented by software and general hardware, or may be implemented by hardware. Based on such understanding, the technical schemes of the present disclosure may be embodied in the form of a software product, and the computer software product may be stored in a computer-readable storage medium, such as a floppy disk of a computer, a read-only memory (ROM), a random access memory (RAM), a flash memory (FLASH), a hard disk or an optical disk. The computer-readable storage medium includes multiple instructions to enable a computer device (which may be a personal computer, a server, a network device, or the like) to perform the method of any of the embodiments of the present disclosure.

The foregoing are only exemplary embodiments of the present disclosure and are not intended to limit the protection scope of the present disclosure.

A block diagram of any logic flow in the drawings of the present disclosure may represent program steps, or may represent an interconnected logical circuit, a module or a function, or may represent a combination of program steps and logical circuits, modules and functions. Computer programs may be stored in a memory. The memory may be of any type suitable to a local technical environment and may be implemented using any suitable data storage technology, such as but not limited to, an ROM, an RAM, an optical storage apparatus and system (a digital versatile disk (DVD), a compact disc (CD)), etc. The computer-readable medium may include a non-transitory storage medium. The data processor may be of any type suitable to the local technical environment, such as but not limited to, a general-purpose computer, a special-purpose computer, a microprocessor, a digital signal processor (DSP), an application-specific integrated circuit (ASIC), a field-programmable gate array (FGPA), and a controller based on a multi-core controller architecture.

A detailed description of exemplary embodiments of the present disclosure has been provided above through exemplary and non-restrictive examples. However, in consideration of the accompanying drawings and claims, various modifications and adjustments to the above embodiments are obvious to a person skilled in the art, but do not depart from the scope of the present disclosure. Accordingly, the proper scope of the present disclosure will be determined by the Claims.

## Claims

1. A network device management method, comprising:
receiving an access authentication request of a network device and authenticating the network device;
creating, in response to the authentication being passed, a loopback interface of the network device according to pre-configuration information, and allocating a loopback interface address, the pre-configuration information comprising a loopback interface address pool and a first address allocation rule; and
managing the network device through the loopback interface address.

2. The method of claim 1, wherein the pre-configuration information further comprises a security management channel interface address pool and a second address allocation rule;
after allocating a loopback interface address, the method further comprises:
creating, according to the pre-configuration information, security management channels of the network device and a corresponding gateway network element, and allocating security management channel interface addresses; and
managing the network device through the loopback interface address comprises:
managing the network device through the security management channels and the loopback interface address.

3. The method of claim 2, further comprising:
delivering a first static route to the network device, a destination address of the first static route being a Wide Area Network (WAN) port address, and a next hop being the security management channel interface address of the gateway network element; and
delivering a second static route to the gateway network element, a destination address of the second static route being the loopback interface address of the network device, and a next hop being the security management channel interface address of the network device.

4. The method of claim 1, wherein the pre-configuration information further comprises:
WAN port address information, a network device identifier information table, and a network device service configuration information table; wherein
the WAN port address information comprises: a WAN port address pool and a third address allocation rule;
the network device identifier information table comprises: a device serial number and a device type corresponding to the network device; and
the network device service configuration information table comprises: a device serial number, a WAN port address, a communication mode, an access authentication address and port, an authentication key, a network configuration enabling state, and a security management channel enabling state corresponding to the network device.

5. The method of claim 4, prior to receiving an access authentication request of a network device, the method further comprising:
delivering a Uniform Resource Locator (URL) to the network device according to the communication mode, the URL being encrypted by the authentication key;
wherein the URL carries access configuration information comprising the WAN port address, the access authentication address and port, and the network configuration enabling state; and
the access configuration information further comprises a security management channel interface address of a corresponding gateway network element in response to the security management channel enabling state being ON.

6. The method of claim 5, wherein the access authentication request is sent by the network device to the access authentication address through the access authentication port in the form of a Transmission Control Protocol (TCP) session; and
the access authentication request carries the device serial number and a Transport Layer Security (TLS) certificate of the network device.

7. The method of claim 6, wherein the authenticating the network device comprises:
in response to the device serial number of the network device belonging to a device serial number in the pre-configuration information, verifying the TLS certificate of the network device, and starting a Network Configuration Protocol (NETCONF) in response to the TLS certificate passing the verification, wherein the authentication is passed; and
in response to the device serial number of the network device not belonging to the device serial number in the pre-configuration information, terminating the TCP session, wherein the authentication fails.

8. A network device management apparatus, comprising:
an authentication module configured to receive an access authentication request of a network device and authenticate the network device;
an interface creation module configured to create, in response to the authentication being passed, a loopback interface of the network device according to pre-configuration information and allocate a loopback interface address, the pre-configuration information comprising a loopback interface address pool and a first address allocation rule; and
a management module configured to manage the network device through the loopback interface address.

9. A network management device, comprising:
one or more controllers; and
a storage apparatus configured to store one or more programs which, when executed by the one or more controllers, cause the one or more controllers to carry out the network device management method of any one of claims 1 to 7.

10. A computer-readable storage medium storing a computer program which, when executed by a controller, cause the controller to carry out the network device management method of any one of claims 1 to 7.
